# EUROPEAN PATENT APPLICATION

(11) **EP 3 866 393 A1**
(43) Date of publication of application: **18.08.2021**
(21) Application number: 19894333.4
(22) Date of filing: 28.08.2019
(51) Int. Cl.: H04L 12/24

(54) **DATA CENTER TRAFFIC EXCHANGE METHOD AND APPARATUS, DEVICE AND STORAGE MEDIUM**

(30) Priority: 04.12.2018 CN 201811473922
(71) Applicant: ZTE Corporation, Shenzhen, Guangdong 518057 (CN)
(72) Inventor: WANG, Shuyi, Nanjing, Jiangsu 210012 (CN); WU, Zhiming, Nanjing, Jiangsu 210012 (CN); YAN, Yongming, Nanjing, Jiangsu 210012 (CN); XU, Haifeng, Nanjing, Jiangsu 210012 (CN); ZUO, Liang, Nanjing, Jiangsu 210012 (CN); XU, Duo, Nanjing, Jiangsu 210012 (CN)
(74) Representative: Regimbeau
(86) International application number: PCT/CN2019/103115
(87) International publication number: WO 2020/114017

(57) **Abstract**

Provided are a data center flow interworking method and apparatus, a device and a storage medium. A data center flow interworking method is characterized in that a software defined network (SDN) controller is provided. The method includes: configuring (S201) at least two physical gateway devices accessing the SDN controller as one logical device, where physical ports of the physical gateway devices are a logical port of the logical device; and implementing (S205) flow interworking between a data center and an external network based on an optimal network path and an association relationship, where the optimal network path is an optimal path from the logical port to the physical ports of the physical gateway devices, and the association relationship is a relationship between the physical ports of the physical gateway devices and the external network. The SDN controller is provided. The logical device configured under the control of the SDN controller manages the flows of the data center globally, thus uniformly scheduling the network flows and achieving the effect of reducing the operation and maintenance complexity.

## Description

### CROSS-REFERENCE TO RELATED APPLICATION(S)

This application claims priority to Chinese Patent Application No. 201811473922.9 entitled "DATA CENTER FLOW INTERNETWORKING METHOD AND APPARATUS, DEVICE AND STORAGE MEDIUM" filed Dec. 4, 2018, the disclosure of which is incorporated herein by reference in its entirety.

### TECHNICAL FIELD

The present application relates to the field of communications and, in particular, to a data center flow interworking method and apparatus, a device, and a storage medium.

### BACKGROUND

As cloud computing and mobile Internet applications develop, complex interactive applications have appeared in a new Internet data center (IDC); especially, due to massive data access and process calls, a single IDC cannot satisfy the needs of Internet applications. Different IDCs must be integrated into a unified resource pool to satisfy the needs of applications. At the same time, the bearer network connecting IDCs must support various upper-layer applications generated therefrom, such as virtualization between data centers (DCs), real-time migration of virtual machines (VMs), cross-DC tenant isolation.

With the rapid development of Internet content providers (ICPs) and Over The Top (OTT, which refers to providing various application services to users through the Internet) service providers providing content and services through the Internet, more and more user flows involve accessing the content and services provided by the ICP/OTT, and a data center is the main platform for the ICP/OTT to provide content and services. Meanwhile, with the maturation and development of a cloud data center, more and more enterprises choose to put Information Technology (IT) systems into the data center. Therefore, the data center is becoming a future gathering point for network flows.

Data center flows are classified into South-North flows and East-West flows. The South-North flows are dominated by content of accessing a data center by a user, while the East-West flows are dominated by synchronization, backup and content delivery network (CDN) push flows within the data center or across data centers. The flows between data centers are mainly born by the Internet. Redundancy protection of data center network flows is the basic requirement of network reliability.

In some cases, a physical gateway device stacking mode is generally adopted to support redundancy protection of data center exit flows. In the stacking mode, the uplink and downlink of a physical gateway device does not sense the actual state switching of the gateway, which causes a problem that two devices must be upgraded simultaneously during version upgrade and that the network is interrupted for a long time. Moreover, a traditional data center network does not have a centralized control point, leading to the incapability of globally managing the network flows of the data center and to uniformly schedule the network flows, thus causing the problem of high operation and maintenance complexity.

### SUMMARY

The embodiments of the present application provide a data center flow interworking method and apparatus, a device, and a storage medium so as to at least solve part of problems in the existing art.

In a first aspect, a data center flow interworking method is provided and a software defined network (SDN) controller is provided. The method includes: configuring at least two physical gateway devices accessing the SDN controller as one logical device, where physical ports of the physical gateway devices are a logical port of the logical device; and implementing flow interworking between a data center and an external network based on an optimal network path and an association relationship, where the optimal network path is an optimal path from the logical port to the physical ports of the physical gateway devices, and the association relationship is a relationship between the physical ports of the physical gateway devices and the external network.

In an embodiment of the embodiments of the present application, the step of configuring the at least two physical gateway devices accessing the SDN controller as the one logical device includes: configuring a VXLAN tunnel endpoint (VTEP) group attribute on the SDN controller to multi-chassis link aggregation group (MC-LAG); and configuring, based on the VTEP group attribute, the at least two physical gateway devices accessing the SDN controller as the one logical device.

In an embodiment of the embodiments of the present application, the step of configuring the at least two physical gateway devices accessing the SDN controller as the one logical device includes: virtualizing the physical ports of the physical gateway devices as the logical port of the logical device.

In an embodiment of the embodiments of the present application, the step of virtualizing the physical ports of the physical gateway devices as the logical port of the logical device includes: configuring information about MC-LAG links of the physical gateway devices.

In an embodiment of the embodiments of the present application, the step of configuring the information about the MC-LAG links of the physical gateway devices includes: virtualizing at least two cross-rack stack ports of the MC-LAG links into the one logical port.

In an embodiment of the embodiments of the present application, the step of virtualizing the physical ports of the physical gateway devices as the logical port of the logical device further includes: configuring information of a peer-link of the physical gateway devices.

In an embodiment of the embodiments of the present application, before the step of implementing the flow interworking between the data center and the external network based on the optimal network path and the association relationship, the method further includes: acquiring the optimal network path from the logical port to the physical ports of the physical gateway devices.

In an embodiment of the embodiments of the present application, the step of acquiring the optimal network path from the logical port to the physical ports of the physical gateway devices includes: acquiring routing information of the physical gateway devices; and computing the optimal network path based on the routing information.

In an embodiment of the embodiments of the present application, before the step of implementing the flow interworking between the data center and the external network based on the optimal network path and the association relationship, the method further includes: configuring the association relationship between the physical ports of the physical gateway devices and the external network.

In an embodiment of the embodiments of the present application, the step of configuring the association relationship between the physical ports of the physical gateway devices and the external network includes: configuring virtual data center (VDC) or downlink control information (DCI) traffic configuration information; and orchestrating, according to the VDC or DCI traffic configuration information, information about an SDN domain and information about a traditional domain of the physical gateway devices so as to obtain the association relationship between the physical ports of the physical gateway devices and the external network.

In a second aspect, a network device is provided and includes a memory, a processor, and a computer program stored in the memory and executable by the processor. When executed by the processor, the computer program implements steps of any one of the methods described in the first aspect.

In a third aspect, a computer-readable storage medium is provided and is configured to store a computer program. When executed by the processor, the computer program implements steps of any one of the methods described in the first aspect.

The above description is merely an overview of the technical solutions of the present application. In order to better understand the technical means of the present application, the present application may be implemented in accordance with the content of the description. The above and other objects, features and advantages of the present application will be more apparent from embodiments of the present application described below.

### BRIEF DESCRIPTION OF DRAWINGS

Various other advantages and benefits will become apparent to those of ordinary skill in the art after the detailed description of the preferred embodiments described below is read. The drawings are merely for the purpose of illustrating the preferred embodiments and are not to be construed as limiting the present application. Furthermore, like reference numerals refer to like parts throughout the drawings.
FIG. 1 is a schematic block diagram of interaction between modules of an SDN controller orchestrating data center network devices so as to implement redundancy protection of gateway exit flows according to embodiment one of the present application;
FIG. 2 is a flowchart of a data center flow interworking method according to embodiment one of the present application;
FIG. 3 is a flowchart of virtualizing physical ports of physical gateway devices to a logical port of a logical device according to embodiment one of the present application;
FIG. 4 is a flowchart of acquiring an optimal network path for forwarding a flow received by a logical port to physical ports of physical gateway device according to embodiment one of the present application;
FIG. 5 is a flowchart of configuring an association relationship between physical ports of physical gateway devices and an external network according to embodiment one of the present application;
FIG. 6 is a networking block diagram of a data center flow interworking apparatus according to embodiment two of the present application;
FIG. 7 is a principle block diagram of a data center flow interworking apparatus according to embodiment two of the present application;
FIG. 8 is a principle block diagram of a logical device configuration module according to embodiment two of the present application;
FIG. 9 is a principle block diagram of a logical interface configuration module according to embodiment two of the present application;
FIG. 10 is a principle block diagram of a path computing module according to embodiment two of the present application;
FIG. 11 is a principle block diagram of an association relationship configuration module according to embodiment two of the present application;
FIG. 12 is a schematic diagram of a master gateway device fault in a data center exit South-North flow scenario according to embodiment three of the present application;
FIG. 13 is a schematic diagram of a peer-link fault in a data center exit South-North flow scenario according to embodiment four of the present application; and
FIG. 14 is a schematic diagram of an MC-LAG port fault in a cross-data center East-West flow scenario according to embodiment five of the present application.

### DETAILED DESCRIPTION

Exemplary embodiments of the present disclosure will be described in detail with reference to the drawings. The drawings illustrate the exemplary embodiments of the present disclosure, but it should be understood that the present disclosure may be implemented in various ways and should not be limited to the embodiments set forth herein. On the contrary, these embodiments are provided for a thorough understanding of the present disclosure and to fully convey the scope of the present disclosure to those skilled in the art.

Since the emergence of a software defined network (SDN), the SDN has gained consistent attention in the industry because of its characteristics of control and forwarding separation, software and hardware decoupling, programmability of traffic to the network, and the like. Using technical advantages of the SDN to serve the new generation of intelligent bearing network with cloud data center interconnection as the main demand will be a new opportunity for future network evolution.

According to the internal situation of most data centers, a software-defined logical network is superimposed on the existing network such that the original network is not modified as much as possible and the logical network on the original network is defined to implement traffic logic, thus solving the network problem of the original data center and greatly saving traditional user investment. Therefore, an Overlay network virtualization architecture, represented by Virtual Extensible LAN (VXLAN), has become a mature solution supported and adopted by most manufacturers. The Overlay refers to a virtualization technology mode superimposed on the network architecture, has a general framework of implementing bearing of an application on the network and separation from other network traffic without large-scale modification to the basic network, and is mainly based on the IP-based basic network technology.

The embodiments of the present application provide a model in which the controller manages and orchestrates physical gateway devices under the SDN architecture and the physical gateway devices adopt a multi-chassis link aggregation group (MC-LAG) mode to implement redundancy protection of data center exit flows. The problems can be solved of long network interruption time during version upgrade and incapability of globally managing, operating and maintaining data center network in deployment of the stacking mode.

Stacking and MC-LAG have their own advantages and disadvantages. Generally speaking, for network design/maintenance personnel, stacking is better in simple management and maintenance, while the MC-LAG is better in reliability and low upgrade risk. The centralized management of the controller in the embodiments of the present application reduces the complexity of operation and maintenance to a certain extent, and the reliability of the network can be greatly improved by adopting the MC-LAG.

Table 1 is a comparative and analysis table of the MC-LAG mode and the stacking mode.

**Table 1 Comparative and Analysis Table of MC-LAG Mode and Stacking Mode**

| | Stacking | MC-LAG |
|---|---|---|
| Theoretical reliability | **Relatively low.** A management plane, a control plane and a data plane are tightly coupled, and a software fault may be transferred across chassis, so the theoretical reliability is relatively low. | **High.** The protocols on software are merely required to be weakly coupled, so the possibility of fault transfer is greatly reduced and the theoretical reliability is high. |
| Upgrade risk | **High.** Upgrade failure will cause network interruption of all traffic under the stacking system, and the upgrade risk is high. | **Low.** Separate upgrade of one member node is supported. Even if the upgrade fails, another member node still works. |
| Upgrade interruption time | **Long.** At ten-minute level for ordinary upgrade; at ten-second level to minute level for RoundRobin of two chassis, independent of traffic; and at second level or no interruption for ISSU upgrade. | **Short.** At second level for ordinary upgrade and no interruption for ISSU upgrade. |
| Network solution design | **Simple.** Designed as a single node. | **Relatively complex.** Required to be designed as two nodes on the side of a three-layer network. |
| Characteristic support | **Comprehensive.** Almost all characteristics are supported. | **Relatively weak.** Not all characteristics are supported, but basic Layer 2 and Layer 3, TRILL, VXLAN and other common protocols commonly used in a data center are |
| | | supported. |
| Configuration maintenance | **Simple.** Only the single node is required to be maintained. | **Relatively complex.** Two nodes are required to be maintained. |

The embodiments of the present application give full play to the advantages of high reliability and low upgrade risk of the MC-LAG technology, and meanwhile make up for the defect of complex configuration and maintenance of the MC-LAG technology to a certain extent through centralized management of gateways by the controller.

According to the embodiments of the present application, the SDN controller is provided, the physical gateway devices are configured as the logical device, and the physical ports of the physical gateway devices are virtualized as the logical port of the logical device. The logical device configured under the control of the SDN controller manages the flows of the data center globally, thus uniformly scheduling the network flows and achieving the effect of reducing the operation and maintenance complexity. Meanwhile, the effect of short network interruption time when a physical gateway device fails or a link fails or a version upgrade is performed can be achieved by orchestrating the physical gateway devices and adopting the MC-LAG mode, and the network reliability is improved. The present application solves the problem of long network interruption time during version upgrade of physical gateway devices in the stacking mode deployment scenario.

### Embodiment one

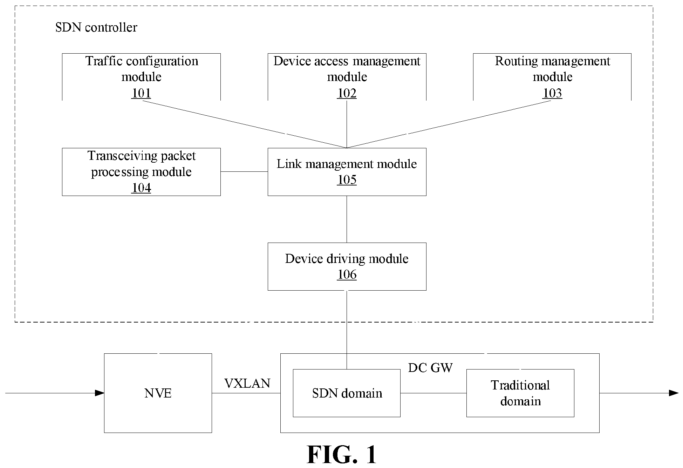

The embodiment of the present application provides a data center flow interworking method, and an SDN controller is provided. As shown in FIG. 1, the SDN controller includes a traffic configuration module 101 configured to configure traffic-related information; a device access management module 102 configured to manage information of physical gateway devices accessing the SDN controller; a routing management module 103 configured to manage routing information of a data center; a link management module 105 configured to collect the device topology of the data center, sense link information, and perform path computing on links according to the routing information of the routing management module 103 so as to obtain an optimal network path; a transceiving packet processing module 104 configured to process a received protocol message; and a device driving module 106 configured to orchestrate the physical gateway devices according to the information of the device access management module 102, the traffic configuration module 101 and the link management module 105.

In an exemplary embodiment, the traffic-related information includes VDC or DCI traffic configuration information. In an exemplary embodiment, the routing information of the data center includes information of static routing, dynamic routing learned by a routing protocol, and interface-related direct routing.

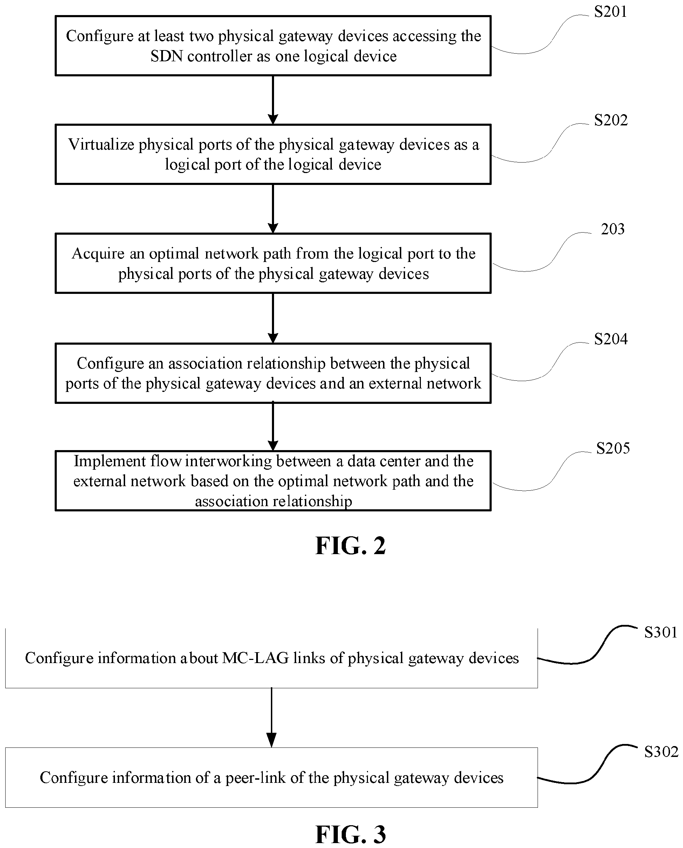

As shown in FIG. 2, a data center flow interworking method includes step S201 in which at least two physical gateway devices accessing the SDN controller are configured as one logical device, where physical ports of the physical gateway devices are a logical port of the logical device. In a specific application scenario, a VTEP group attribute on the SDN controller is configured to MC-LAG. Specifically, VTEP group information is configured on the SDN controller and the VTEP group attribute is MC-LAG, making two physical gateway devices present as one logical device on the network topology layer. The device access management module 102 saves information of the accessed physical gateway devices, and the information of the physical gateway devices is indexed by Deviceid information. In this application scenario, two physical gateway devices are merely used as an example and are not intended to limit the present application.

The physical ports of the physical gateway devices are the logical port of the logical device. In an exemplary embodiment, as described in step S202 below, the physical ports of the physical gateway devices are virtualized as the logical port of the logical device.

In step S205, flow interworking between a data center and an external network is implemented based on an optimal network path and an association relationship. The optimal network path is an optimal path from the logical port to the physical ports of the physical gateway devices, and the association relationship is a relationship between the physical ports of the physical gateway devices and the external network. In an exemplary embodiment, the optimal network path and the association relationship may be set before the step in which the flow interworking between the data center and the external network is implemented based on the optimal network path and the association relationship, or may be set parameters.

In a case of a physical gateway device fault or a link fault, the link management module 105 of the SDN controller senses gateway fault information, then updates link-related information, and obtains the latest forwarding path through path computing. Therefore, the new optimal network path for flow forwarding in the logical device is obtained, and flow table information of the SDN domain and routing information of the traditional domain of the physical gateway device are updated through the device driving module, so that the interruption time of gateway exit South-North flows and East-West flows is short in the case of gateway fault or link fault.

Through the data center flow interworking method, redundancy protection of South-North flows and DCI East-West flows under SDN data center networking can be implemented, a backup device or link can be successfully switched to in the case of device fault or link fault, and the network interruption time is short.

In an embodiment, the step S201 of configuring the at least two physical gateway devices accessing the SDN controller as the one logical device further includes the step S202 of virtualizing the physical ports of the physical gateway devices as the logical port of the logical device.

In an exemplary embodiment, as shown in FIG. 3, the step of virtualizing the physical ports of the physical gateway devices as the logical port of the logical device includes: the step S301 of configuring information about MC-LAG links of the physical gateway devices.

In an exemplary embodiment, the step in which the SDN controller configures the MC-LAG links of the physical gateway devices is specifically to virtualize two cross-rack stack ports of the MC-LAG links into one logical port.

Specifically, the SDN controller virtualizes two cross-rack stack ports of the MC-LAG links into one logical port.

In an exemplary embodiment, the step of virtualizing the physical ports as the logical port of the logical device further includes the step S302 of configuring information of a peer-link of the physical gateway devices.

In a specific application scenario, the SDN controller configures information of the MC-LAG links and the peer-link of the physical gateway devices. The configuration is to virtualize the two cross-rack stack ports of the MC-LAG as one logical port. After the two cross-rack stack ports are virtualized into one logical port, during data transmission, data from the logical port is transmitted through merely one port of the MC-LAG, and the other port of the MC-LAG is in a backup state. That is, two physical ports of the MC-LAG are virtualized as one logical port during data transmission and the virtual logical port is used for data interaction with the outside, but specifically for the physical gateway devices, merely one physical port of the MC-LAG needs to be configured for data interaction, and the other backup port of the MC-LAG does not need to be configured. The unconfigured port of the MC-LAG also occupies a global number on the logical device. The peer-link may be displayed on the management plane and may be configured accordingly. The configured MC-LAG information of the physical gateway devices is stored in the corresponding device information table of the device access management module 102.

In an embodiment, before the step S205 of implementing the flow interworking between the data center and the external network based on the optimal network path and the association relationship, the method further includes step S203 of acquiring the optimal network path from the logical port to the physical ports of the physical gateway devices. That is, reception by the logical device refers to receiving flows through the logical port. The flows received by the logical device need to be transmitted to the physical ports of the physical gateway devices, but the logical port corresponds to the ports of a plurality of physical gateway devices, so it is necessary to compute the optimal path from the logical port to the physical ports of the physical gateway devices.

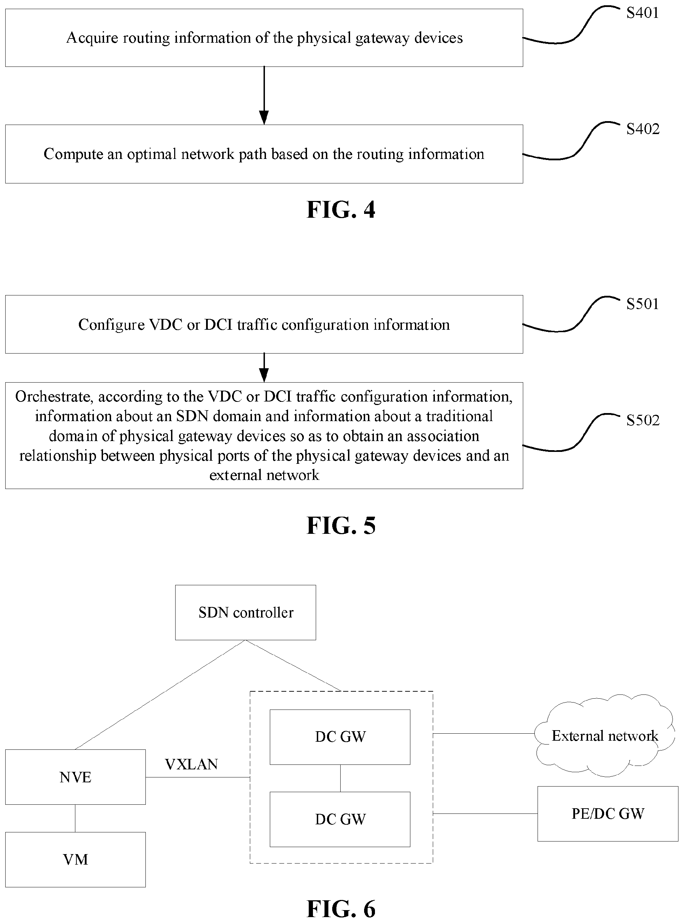

In an exemplary embodiment, the step of acquiring the optimal network path from the logical port to the physical ports of the physical gateway devices, as shown in FIG. 4, includes step S401 of acquiring routing information of the physical gateway devices and step S402 of computing the optimal network path based on the routing information.

In a specific application scenario, the SDN controller receives ARP learning, MAC learning, topology, and table entry information. The transceiving packet processing module 104, the routing management module 103 and the link management module 105 update the routing information of the physical gateway devices according to the actual message of the logical port interface and the device link port information to compute the optimal network path. Then an Openflow flow table is sent through the device driving module to the NVE computing node and the SDN domain of physical gateway devices to guide network flow forwarding inside the data center.

In an embodiment, before the step S205 of implementing the flow interworking between the data center and the external network based on the optimal network path and the association relationship, the method further includes step S204 of configuring the association relationship between the physical ports of the physical gateway devices and the external network.

In an exemplary embodiment, the step of configuring the association relationship between the physical ports of the physical gateway devices and the external network, as shown in FIG. 5, includes step S501 of configuring VDC or DCI traffic configuration information and step S502 of orchestrating, according to the VDC or DCI traffic configuration information, information about an SDN domain and information about a traditional domain of the physical gateway devices so as to obtain the association relationship between the physical ports of the physical gateway devices and the external network.

In a specific application scenario, VDC traffic information such as data center Network, Port, Subnet and Vrouter and an external network is configured on a cloud platform. The SDN controller configures the association relationship between the physical gateway devices and the external network, uses the logical device as a logical router (Vrouter), and configures the configuration information of the logical router onto a physical gateway device entity, thus configuring information of the port group connecting the physical gateway devices and the external network or an external device. DCI traffic is configured according to requirements after VDC traffic is created on the cloud platform. The type of port group configured for South-North flows is South-North, and the type of port group configured for DCI East-West flows is East-West. A port in the port group is associated with information of the generated logical port corresponding to the gateways. According to the configured VDC or DCI traffic configuration information in combination with the device information of the device access management module 102 and the relevant information of the link management module 105, the traffic configuration module 101 notifies, according to the device situation, the device driving module of related information about orchestration of the SDN domain and traditional domain of the physical gateway devices. The SDN domain mainly involves the Openflow flow table forwarding information and is to ensure that flows in the domain of the data center can be directed to the physical gateway devices. The traditional domain mainly involves the routing configuration information about interworking with an external device and MC-LAG related information for redundancy protection of the physical gateway devices. The controller may configure the traditional domain of the physical gateway devices through device supported southbound configuration protocols (with protocol type unlimited) such as Netconf, Restful or Restconf.

The embodiment describes a variety of scenarios for redundancy protection of data center exit flows. The main scenarios include the interworking scenarios of South-North flows from the data center exit to the external network and the East-West flows across the data centers. The South-North flows are mainly Layer 3 flows, and the east-west flows across the data centers include Layer 2 flows and Layer 3 flows. When the switching between physical gateway devices and the switching between physical gateway device links are performed in the above two scenarios, the network flow interruption time is short and the ordinary upgrade is at the second level.

### Embodiment two

An SDN controller is the core component for managing a data center network. The modules included in the SDN controller and the interaction diagram of the modules are shown in FIG. 1. The SDN controller includes a traffic configuration module 101, a device access management module 102, a routing management module 103, a link management module 105, a transceiving packet processing module 104 and a device driving module.

The traffic configuration module 101 is configured to configure information related to traffic, the information mainly including configuration information related to VDC network and DCI traffic.

The device access management module 102 is configured to manage information related to accessed physical gateway devices, the information being used when the SDN controller orchestrates the physical gateway devices.

The routing management module 103 is configured to manage routing information related to a data center network, the routing information including configured routing information of static routing, dynamic routing learned by a routing protocol, interface-related direct routing, etc.

The link management module 105 is configured to collect the device topology of the data center network, sense link information, and perform path computing on links according to the routing information of the routing management module 103 so as to obtain information of the optimal link of the data center network.

The transceiving packet processing module 104 is configured to process a protocol message, such as ARP and Openflow, taken over by the controller.

The device driving module is configured to orchestrate specific physical gateway devices according to the physical gateway device access information of the device access management module 102, the traffic-related information of the traffic configuration module 101 and the link information of the link management module 105.

In an exemplary embodiment, the data center flow interworking apparatus further includes a data center gateway configured to provide a gateway service for accessing the data center.

In an exemplary embodiment, the data center flow interworking apparatus further includes a Network Virtualization EndPoint and a host, where the host is connected to the Network Virtualization EndPoint, and the Network Virtualization EndPoint is connected to the SDN controller.

As shown in FIG. 6, the data center flow interworking apparatus includes the SDN controller. The SDN controller is configured to orchestrate and manage the networks of the SDN data center, implement the forwarding of Layer 2 flows and Layer 3 flows inside the data center by sending the Openflow (the core technology of SDN control and forwarding separation) flow table to a Vxlan Tunnel EndPoint (VTEP), and orchestrate physical gateway devices to implement the interworking between an intra-domain network and an out-of-domain network and the redundancy protection of flows.

The Network Virtualization EndPoint (NVE) is a VTEP device inside the SDN data center, and may be an Openflow switch or a TOR switch.

The host is a virtual machine (VM) in the case of the Openflow software switch in the data center, and the host is a bare metal server in the case of the Top Of Rack (TOR) switch.

A data center gateway (DC GW) is a physical gateway device in the SDN data center and provides gateway services for users to access traffic in the SDN data center. South-North flows and East-West flows from inside the DC domain to outside the DC domain go to an external network and a peer DC through the DC GW respectively.

The upper-layer cloud platform and cloud orchestrator deployed in the cloud data center mainly notify the SDN controller of the network orchestration information for network management and do not directly participate in the collaboration with the underlying physical gateway devices, which is not marked in FIG. 2.

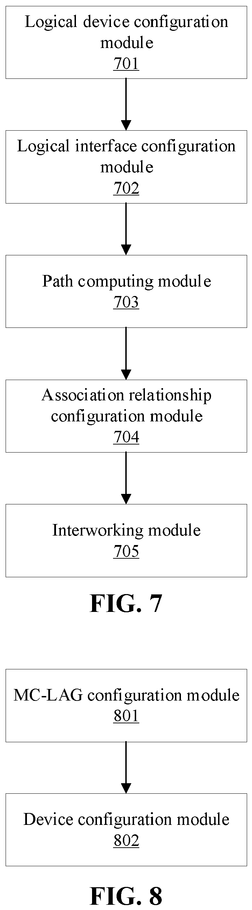

As shown in FIG. 7, a data center flow interworking apparatus is provided, and an SDN controller is provided. The apparatus includes a logical device configuration module 701, a logical interface configuration module 702, a path computing module 703, an association relationship configuration module 704, and an interworking module 705. The logical device configuration module 701 is configured to configure at least two physical gateway devices accessing the SDN controller as one logical device. The logical interface configuration module 702 is configured to virtualize the physical ports of the physical gateway devices as the logical port of the logical device. The path computing module 703 is configured to acquire an optimal network path from the logical port to the physical ports of the physical gateway devices. The association relationship configuration module 704 is configured to configure the association relationship between the physical ports of the physical gateway devices and the external network. The interworking module 705 is configured to implement flow interworking between a data center and an external network based on the optimal network path and the association relationship.

In an embodiment of the embodiments of the present application, as shown in FIG. 8, the logical device configuration module 701 includes an MC-LAG configuration module 801 configured to configure a VTEP group attribute on the SDN controller to MC-LAG and a device configuration module 802 configured to configure, based on the VTEP group attribute, the physical gateway devices accessing the SDN controller as one logical device.

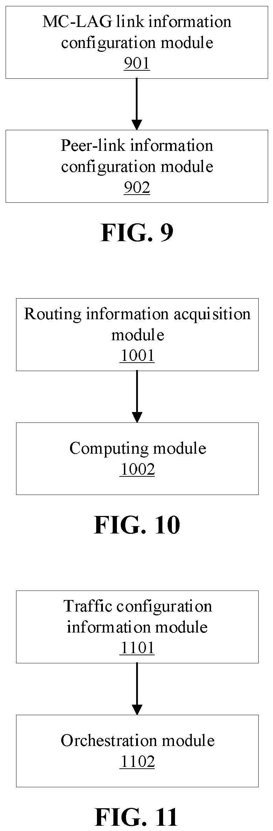

In an embodiment of the embodiments of the present application, as shown in FIG. 9, the logical interface configuration module 702 includes an MC-LAG link information configuration module 901 configured to configure information about MC-LAG links of the physical gateway devices.

In an embodiment of the embodiments of the present application, the MC-LAG link information configuration module is specifically configured to virtualize two cross-rack stack ports of the MC-LAG links into one logical port.

In an embodiment of the embodiments of the present application, the logical interface configuration module 702 further includes a peer-link information configuration module 902 configured to configure information of a peer-link of the physical gateway devices.

In an embodiment of the embodiments of the present application, as shown in FIG. 10, the path computing module 703 includes a routing information acquisition module 1001 configured to acquire routing information of the physical gateway devices and a computing module 1002 configured to compute the optimal network path based on the routing information.

In an embodiment of the embodiments of the present application, as shown in FIG. 11, the association relationship configuration module 704 includes a traffic configuration information module 1101 configured to configure VDC or DCI traffic configuration information and an orchestration module 1102 configured to orchestrate, according to the VDC or DCI traffic configuration information, information about an SDN domain and information about a traditional domain of the physical gateway devices so as to obtain the association relationship between the physical ports of the physical gateway devices and the external network.

### Embodiment three

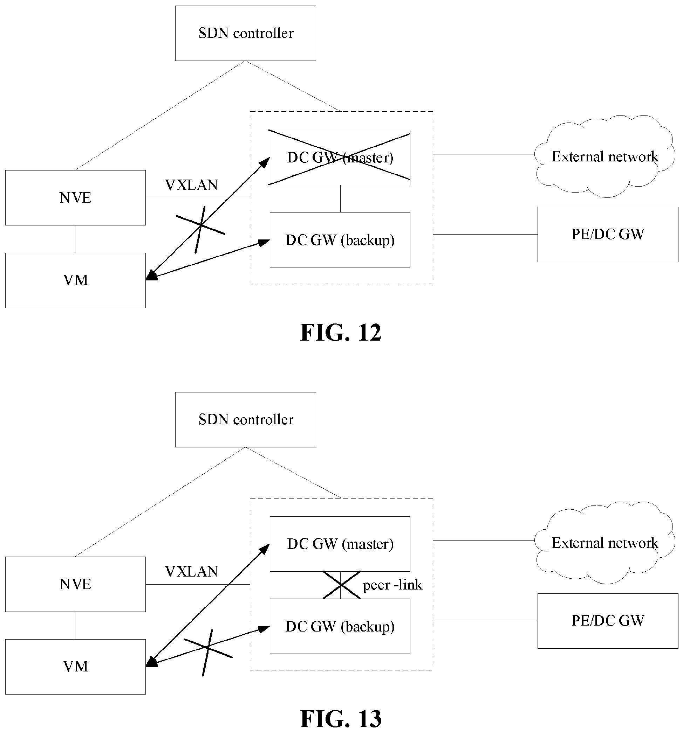

As shown in FIG. 12, in the interworking scenario of South-North flows from the data center exit to the external network, the master gateway device fails, and the main steps for implementation are as follows. In step one, the SDN controller accesses the physical gateway devices and is configured with VTEP group information, where the VTEP group attribute is MC-LAG, and two physical gateway devices present as one logical device on the network topology layer. In step two, the SDN controller configures information of MC-LAG links and a peer-link for the physical gateway devices, where two cross-rack stack ports configured as MC-LAG are virtualized as one logical port, and the port which is not configured as MC-LAG also occupies a global number on the logical device. The peer-link may be displayed on the management plane and may be configured accordingly. In step three, a virtual router is created on an Openstack cloud platform to be associated with external network configuration, the association relationship between the physical gateway devices and the external network is configured on the SDN controller, and the type of port group of the physical gateway devices connecting with the outside is configured to be South-North. In step four, ARP learning, MAC learning, topology and table entries of the SDN controller are all operated through the logical port of the logical device. In step five, flows in the domain of the SDN data center can reach the external network through physical gateway devices so that South-North flow interworking from inside the domain to outside the domain is implemented. In step six, when the master gateway device fails, the device with the MC-LAG state as backup will be upgraded to the master device. The link state of the Eth-Trunk (Ethernet link aggregation group) on the device side is still Up, the flow forwarding state remains unchanged, and the flows continue to be forwarded. The link state of the Eth-Trunk on the device side with the MC-LAG state as master changes to Down, and the dual-homing scenario changes to the single-homing scenario. Through the preceding steps, the interruption time of data center exit South-North flows can be at the second level in the case where the master gateway device fails.

### Embodiment four

As shown in FIG. 13, in the interworking scenario of South-North flows from the data center exit to the external network, the peer-link fails, and the associated steps are as follows. In step one, the SDN controller accesses the physical gateway devices and is configured with VTEP group information, where the VTEP group attribute is MC-LAG, and two physical gateway devices present as one logical device on the network topology layer. In step two, the SDN controller configures the information of MC-LAG links and a peer-link for the physical gateway devices, where two cross-rack stack ports configured as MC-LAG are virtualized as one logical port, and the unconfigured port of the MC-LAG also occupies a global number on the logical device. The peer-link may be displayed on the management plane and may be configured accordingly. In step three, a virtual router is created on an Openstack cloud platform to be associated with external network configuration, the association relationship between the physical gateway devices and the external network is configured on the SDN controller, and the type of port group of the physical gateway devices connecting with the outside is configured to be South-North. In step four, ARP learning, MAC learning, topology and table entries of the SDN controller are all operated through the logical port of the logical device. In step five, flows in the domain of the SDN data center can reach the external network through physical gateway devices so that South-North flow interworking from inside the domain to outside the domain is implemented. In step six, the peer-link fails; and when the peer-link fails, the MC-LAG master-backup state determines the link state of the Eth-Trunk. The link state of the Eth-Trunk on the device side with the MC-LAG state as master is still Up. The link state of the Eth-Trunk on the device side with the MC-LAG state as backup changes to Down, and the dual-homing scenario changes to the single-homing scenario. If the peer-link fails but has normal heartbeats, the MC-LAG interface on the device in the state of backup will be caused to be in the ERROR DOWN state. The physical interface in the ERROR DOWN state will automatically return to the Up state once the peer-link recovers from the fault. Through the preceding steps, the interruption time of data center exit South-North flows can be at the second level in the case where the peer-link fails.

### Embodiment five

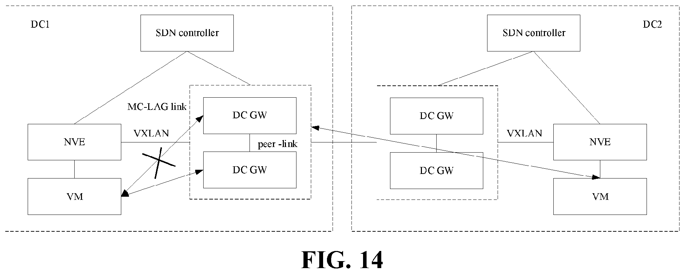

As shown in FIG. 14, in the scenario of flow interworking across data centers, an MC-LAG port fails, and the associated steps are as follows. In step one, the SDN controller accesses the physical gateway devices and is configured with VTEP group information, where the VTEP group attribute is MC-LAG, and two physical gateway devices present as one logical device on the network topology layer. In step two, the SDN controller configures the MC-LAG links and the information of the peer-link for the physical gateway devices, where two cross-rack stack ports configured as MC-LAG are virtualized as one logical port, and the unconfigured port of the MC-LAG also occupies a global number on the logical device. The peer-link may be seen on the management plane and may be configured accordingly. In step three, a virtual router is created on the Openstack cloud platform, DCI instances are created on the cloud orchestrator (L2/L3 DCI instances are created according to an application scenario), and the type of port group of the physical gateway devices configured on the SDN controller and of external devices is East-West. In step four, ARP learning, MAC learning, topology and table entries of the SDN controller are all operated through the logical port of the logical device. In step five, flows in the domain of the SDN data center can reach a peer data center through physical gateway devices so that East-West flow interworking across data centers is implemented. In step six, when the MC-LAG port fails, the MC-LAG master-backup state does not change, flows are switched to another link to be forwarded, and the link state of the failed Eth-Trunk changes to Down. Through the MC-LAG mechanism, flows are no longer forwarded through the failed Eth-Trunk link, and the VXLAN dual-homing scenario changes to the single-homing scenario. The SDN controller senses the state change of the MC-LAG port and updates the Mac- and Arp- related entries according to the latest state to guide the device to perform forwarding. Through the preceding steps, the interruption time can be at the second level in the scenario of East-West flow interworking across data centers after the MC-LAG port fails.

Embodiment three to embodiment five are mainly described for the implementation steps with respect to a device fault, a link fault, and a port fault. These three types of faults will occur in both the data center exit South-North flow scenario and the scenario of East-West flow interworking across data centers. Cases are not enumerated herein, and the collaboration processes of the controller and physical gateway devices in the case of the three types of faults are mainly described.

With the method and apparatus provided in the embodiments of the present application, the centralized management of the physical gateway devices by the SDN controller is implemented. Meanwhile, the effect of short network interruption time when a physical gateway device fails or a link fails or a version upgrade is performed can be achieved by orchestrating the physical gateway devices with the MC-LAG mode, and the network reliability is improved. The implementation of such technology solves the problem of long network interruption time during version upgrade of physical gateway devices in the stacking mode deployment scenario.

### Embodiment six

A network device, which may be understood as an entity apparatus, is provided in the embodiment of the present application and includes a processor and a memory storing instructions executable by the processor. When executed by the processor, the instructions perform steps of any one the methods described in embodiment one.

For specific embodiment processes of the preceding steps of the methods, reference may be made to the first embodiment and the second embodiment. Details are not repeated here.

The processor may be a general-purpose processor such as a central processing unit (CPU), a digital signal processor (DSP), an application specific integrated circuit (ASIC), or one or more integrated circuits configured to implement embodiments of the present application. The memory is configured to store the instructions executable by the processor; the memory is configured to store a program code and transmit the program code to the processor. The memory may include a volatile memory such as a random access memory (RAM), may include a non-volatile memory such as a read-only memory (ROM), a flash memory, a hard disk drive (HDD) or a solid-state drive (SSD), and may also include a combination of the preceding types of memories.

### Embodiment seven

A computer-readable storage medium is provided in the embodiment of the present application and is configured to store a computer program. When executed by a processor, the computer program implements steps of any one of the methods described in embodiment one.

For specific embodiment processes of the preceding steps of the methods, reference may be made to the first embodiment and the second embodiment. Details are not repeated here. The computer-readable storage medium includes, but is not limit to, a ROM, a RAM, a magnetic disk, an optical disk, and the like.

It is to be noted that as used herein, the term "comprising", "including" or any other variant thereof is intended to encompass a non-exclusive inclusion so that a process, method, article or apparatus that includes a series of elements not only includes these elements but also includes other elements that are not expressly listed or are inherent to such a process, method, article or apparatus. In the absence of more restrictions, the elements defined by the statement "including a ..." do not exclude the presence of additional identical elements in the process, method, article or apparatus that includes the elements.

The serial numbers of the embodiments of the present application are for description only and not for the superiority or inferiority of the embodiments.

From the description of the preceding embodiments, it will be apparent to those skilled in the art that the method in the preceding embodiments may be implemented by software plus a necessary general-purpose hardware platform or may of course be implemented by hardware. However, in many cases, the former is a preferred implementation. Based on such understanding, the technical solution provided in the present application substantially, or the part contributing to the existing art, may be embodied in the form of a software product. The computer software product is stored on a storage medium (such as a ROM/RAM, a magnetic disk or an optical disk) and includes several instructions for enabling a terminal (which may be a mobile phone, a computer, a server, an air conditioner, or a network device) to perform the method according to each embodiment of the present application.

The embodiments of the present application are described above in conjunction with the drawings, but the present application is not limited to the preceding embodiments. The preceding embodiments are merely illustrative and not limiting. In light of the present application and without departing from the spirit of the present application and the scope of the claims, those of ordinary skill in the art can make many forms, all of which fall within the scope of the present application.

## Claims

1. A data center flow interworking method, **characterized in that** a software defined network, SDN, controller is provided, and the method comprises:
configuring at least two physical gateway devices accessing the SDN controller as one logical device, wherein physical ports of the at least two physical gateway devices are a logical port of the logical device; and
implementing flow interworking between a data center and an external network based on an optimal network path and an association relationship, wherein the optimal network path is an optimal path from the logical port to the physical ports of the at least two physical gateway devices,
and the association relationship is a relationship between the physical ports of the at least two physical gateway devices and the external network.

2. The data center flow interworking method of claim 1, wherein configuring the at least two physical gateway devices accessing the SDN controller as the one logical device comprises:
configuring a VXLAN tunnel endpoint, VTEP, group attribute on the SDN controller to multi-chassis link aggregation group, MC-LAG; and
configuring, based on the VTEP group attribute, the at least two physical gateway devices accessing the SDN controller as the one logical device.

3. The data center flow interworking method of claim 2, wherein configuring the at least two physical gateway devices accessing the SDN controller as the one logical device comprises:
virtualizing the physical ports of the at least two physical gateway devices as the logical port of the one logical device.

4. The data center flow interworking method of claim 3, wherein virtualizing the physical ports of the at least two physical gateway devices as the logical port of the one logical device comprises:
configuring information about MC-LAG links of the at least two physical gateway devices.

5. The data center flow interworking method of claim 4, wherein configuring the information about the MC-LAG links of the at least two physical gateway devices comprises:
virtualizing at least two cross-rack stack ports of the MC-LAG links into the one logical port.

6. The data center flow interworking method of claim 3, wherein virtualizing the physical ports of the at least two physical gateway devices as the logical port of the one logical device further comprises:
configuring information of a peer-link of the at least two physical gateway devices.

7. The data center flow interworking method of claim 1, wherein before the step of implementing the flow interworking between the data center and the external network based on the optimal network path and the association relationship, the method further comprises:
acquiring the optimal network path from the logical port to the physical ports of the at least two physical gateway devices.

8. The data center flow interworking method of claim 7, wherein acquiring the optimal network path from the logical port to the physical ports of the at least two physical gateway devices comprises:
acquiring routing information of the at least two physical gateway devices; and
computing the optimal network path based on the routing information.

9. The data center flow interworking method of claim 1, wherein before the step of implementing the flow interworking between the data center and the external network based on the optimal network path and the association relationship, the method further comprises:
configuring the association relationship between the physical ports of the at least two physical gateway devices and the external network.

10. The data center flow interworking method of claim 9, wherein configuring the association relationship between the physical ports of the at least two physical gateway devices and the external network comprises:
configuring virtual data center, VDC, or downlink control information, DCI, traffic configuration information; and
orchestrating, according to the VDC or DCI traffic configuration information, information about an SDN domain and information about a traditional domain of the at least two physical gateway devices so as to obtain the association relationship between the physical ports of the at least two physical gateway devices and the external network.

11. A network device, comprising a memory, a processor, and a computer program stored in the memory and executable by the processor, wherein when executed by the processor, the computer program implements the method of any one of claims 1 to 10.

12. A computer-readable storage medium, which is configured to store a computer program, wherein when executed by the processor, the computer program implements steps of the method of any one of claims 1 to 10.
